# EUROPEAN PATENT APPLICATION

(11) **EP 4 625 184 A1**
(43) Date of publication of application: **01.10.2025**
(21) Application number: 25160651.3
(22) Date of filing: 27.02.2025
(51) Int. Cl.: G06F 12/0862

(54) **DYNAMIC PREFETCH MODULATION ENABLING AUGMENTED BANDWIDTH CONTROL**

(30) Priority: 30.03.2024 US 202418622891
(71) Applicant: INTEL Corporation, Santa Clara, CA 95054 (US)
(72) Inventor: A, Priadarshni, 600017 Chennai (IN); NUZMAN, Joseph, 34381 Haifa (IL); SARKAR, Avishek, 700104 Kolkata (IN)
(74) Representative: HGF

(57) **Abstract**

Techniques for dynamic prefetch modulation are described. In an embodiment, an apparatus includes one or more processor cores, a cache, and a dynamic prefetch modulator to control access to a system memory for a prefetch request from one of the one or more processor cores based on whether the prefetch request misses the cache and on a system memory stress level.

## Description

### BACKGROUND

Memory bandwidth is an important factor in the performance of servers and other computers and information processing systems. Existing techniques aimed at improving performance by monitoring and controlling memory traffic at the interface between main memory and the processor(s) include Dynamic Prefetcher Throttling (DPT) and Memory Bandwidth Allocation (MBA).

### BRIEF DESCRIPTION OF DRAWINGS

Various examples in accordance with the present disclosure will be described with reference to the drawings, in which:
FIG. 1 illustrates a system for dynamic prefetch modulation according to embodiment.
FIG. 2 illustrates a processor for dynamic prefetch modulation according to an embodiment.
FIG. 3 illustrates a method for dynamic prefetch modulation according to an embodiment.
FIG. 4 illustrates an example computing system.
FIG. 5 illustrates a block diagram of an example processor and/or System on a Chip (SoC) that may have one or more cores and an integrated memory controller.
FIG. 6A is a block diagram illustrating both an example in-order pipeline and an example register renaming, out-of-order issue/execution pipeline according to examples.
FIG. 6B is a block diagram illustrating both an example in-order architecture core and an example register renaming, out-of-order issue/execution architecture core to be included in a processor according to examples.
FIG. 7 illustrates examples of execution unit(s) circuitry.
FIG. 8 is a block diagram illustrating the use of a software instruction converter to convert binary instructions in a source instruction set architecture to binary instructions in a target instruction set architecture according to examples.

### DETAILED DESCRIPTION

The present disclosure relates to methods, apparatus, systems, and non-transitory computer-readable storage media for dynamic prefetch modulation. A feature or features supported by or implemented in a processor, system, etc. according to embodiments may be referred to as dynamic prefetch modulation. According to some examples, an apparatus includes one or more processor cores, a cache, and a dynamic prefetch modulator to control access to a system memory for a prefetch request from one of the one or more processor cores based on whether the prefetch request misses the cache and on a system memory stress level.

As mentioned in the background section, existing techniques aimed at improving computer system performance by monitoring and controlling memory traffic (e.g., the number of memory requests) at the interface between main memory (e.g., dynamic random access memory or DRAM) and the processor(s) (e.g., central processing unit(s) (CPU(s)) and/or other processor(s)) include DPT and MBA. For example, DPT may be used to make prefetcher engines less aggressive as memory stress levels increase.

Additional memory bandwidth based performance improvements that may be provided by embodiments may be desired, particularly in view of estimates that more than 33% of server workloads are memory centric and as the number of processors and processor cores in computer systems continues to increase. Embodiments may provide memory traffic control, based on the scope of access of memory requests, at a finer granularity than DPT, MBA, or other existing techniques that control or restrict access without differentiating between request types. Because prefetch requests may weigh heavily on measures of performance (e.g., instructions per cycle or IPC), DPT may result in prefetch requests being generated at very low rates, or completely stopped. However, not all prefetches need access to the DRAM, as some may obtain their data from a cache (e.g., a last level cache or LLC) without having any impact on the DRAM access bandwidth. Embodiments may provide an IPC gain by having a smart dispatch of prefetch requests from the LLC towards the DRAM as a function of the running DRAM bandwidth stress levels (which may be measured by existing DPT techniques and therefore referred to as DPT level) in the system.

The use of embodiments may also be desired because they may be easily compatible with software exposed bandwidth control mechanisms (e.g., MBA). Embodiments may provide for dynamic programmability at the customer end, for example, by monitoring information (e.g., type of request, LLC hit or miss, and the running DPT level in the system). This information is already readily available at the customer end, such as through performance monitors (PMONs).

Therefore, implementations may add little cost in hardware, die area, and/or power consumption (simulations show an IPC to Cdyn (dynamic capacitance) ratio increase greater than 1). Embodiments may include programmable tuning capability for dynamic bandwidth optimization, may be easily compatible with and complementary to existing industry standard bandwidth centric features (e.g., MBA), may be easily scalable with increasing core counts, and do not impact any existing interconnect protocols.

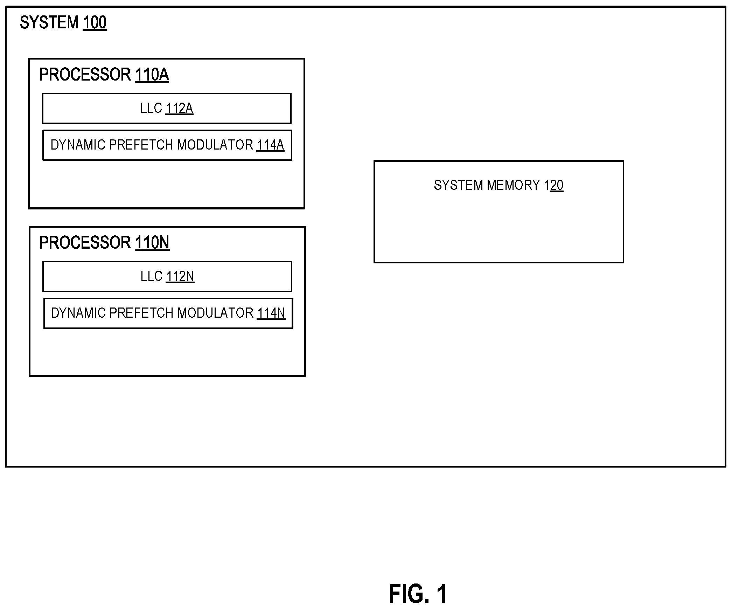

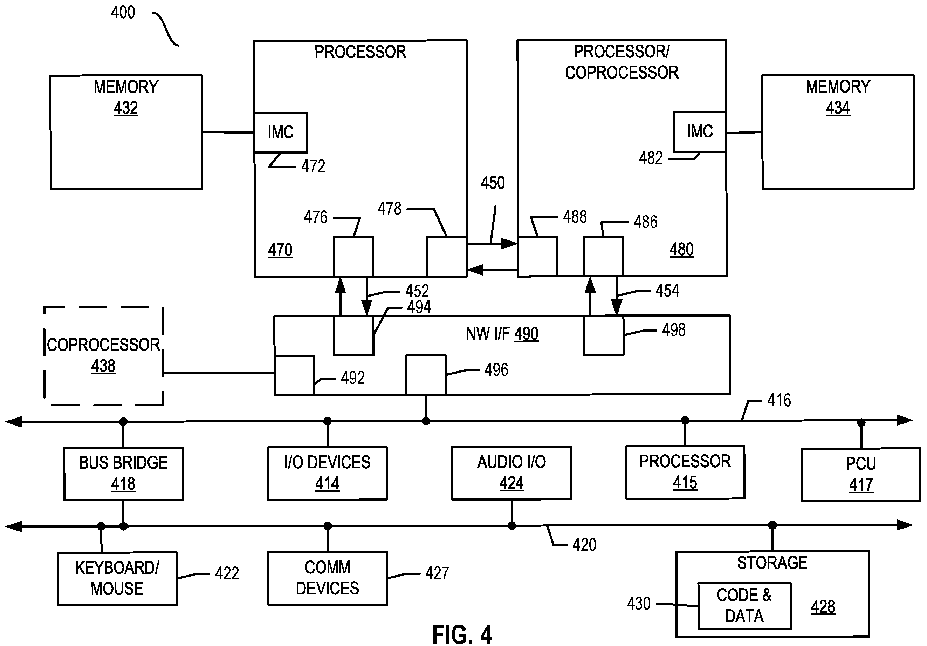

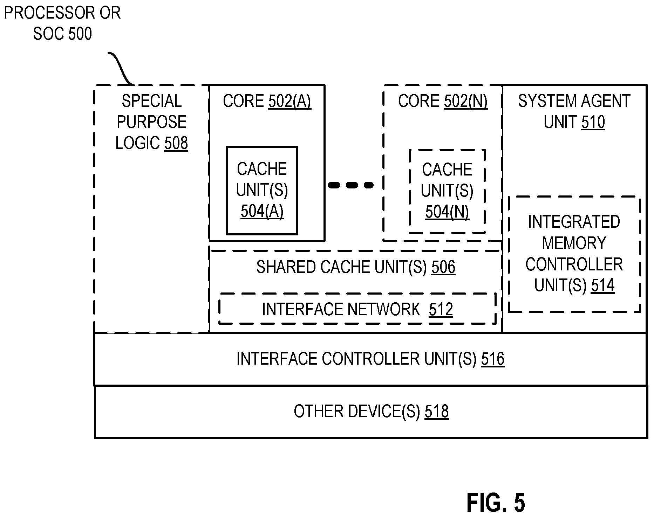

FIG. 1 illustrates a system 100 for dynamic prefetch modulation according to an embodiment. System 100 may represent a server, computer system, information processing system, etc., such as system 400 in FIG. 4, as described below. As shown in FIG. 1, system 100 includes one or more processors 110A to 110N and a main or system memory 120. Any of processors 110A to 110N may correspond to any of processors 470, 480, or 415 in system 400 in FIG. 4 and/or processor 500 in FIG. 5, each as described below. System memory 120 may correspond to any or any combination of memories 432 and 434 in FIG. 4.

System 100 and/or any or any combination of processors 110A to 110N may include multiple cache memories arranged hierarchically to provide access to data with lower latency than the latency of transactions to system memory 120. For example, a cache hierarchy may include a level 0 (L0) cache, a level 1 (L1) cache, and a level 2 (L2) or mid-level cache (MLC) residing within a processor core, plus a level 3 (L3) or last level cache (LLC) outside a processor core (e.g., in an uncore or system agent). For example, as shown in FIG. 1, processor 110A includes LLC 112A, and processor 110N includes LLC 112N.

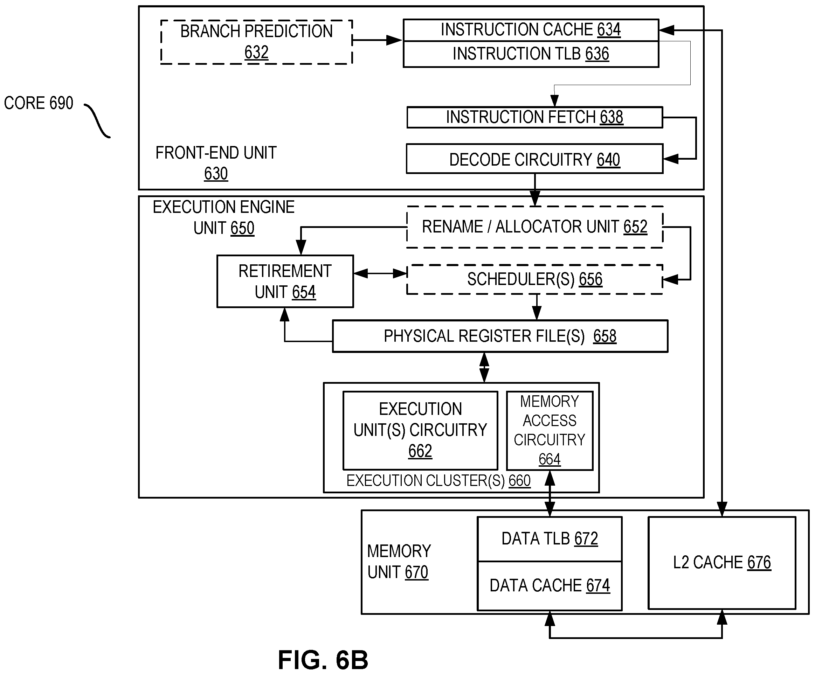

Shown for example in FIG. 1 as dynamic prefetch modulators 114A and 114N in processors 110A and 110N, any number of processors in a system may include a dynamic prefetch modulator according to embodiments. In embodiments, a dynamic prefetch modulator may be implemented in circuitry, logic gates, structures, hardware, etc., all or parts of which may be included in or connected to a cache (e.g., LLC) and/or memory controller, such as integrated memory controllers (each, an IMC) 472 and 482 in FIG. 4, shared cache unit(s) 506 and/or IMC unit(s) 514 in FIG. 5, and/or memory unit 670 in FIG. 6B.

In embodiments and a further described below, one or more a dynamic prefetch modulators (e.g., 114A, 114N, etc.) may control access to a main or system memory (e.g., 120) for prefetch requests based on whether the prefetch requests hit or miss a cache (e.g., 112A, 112N, etc.) and the running memory stress level in the system. In various embodiments, the cache may be an LLC cache, a system cache, etc.

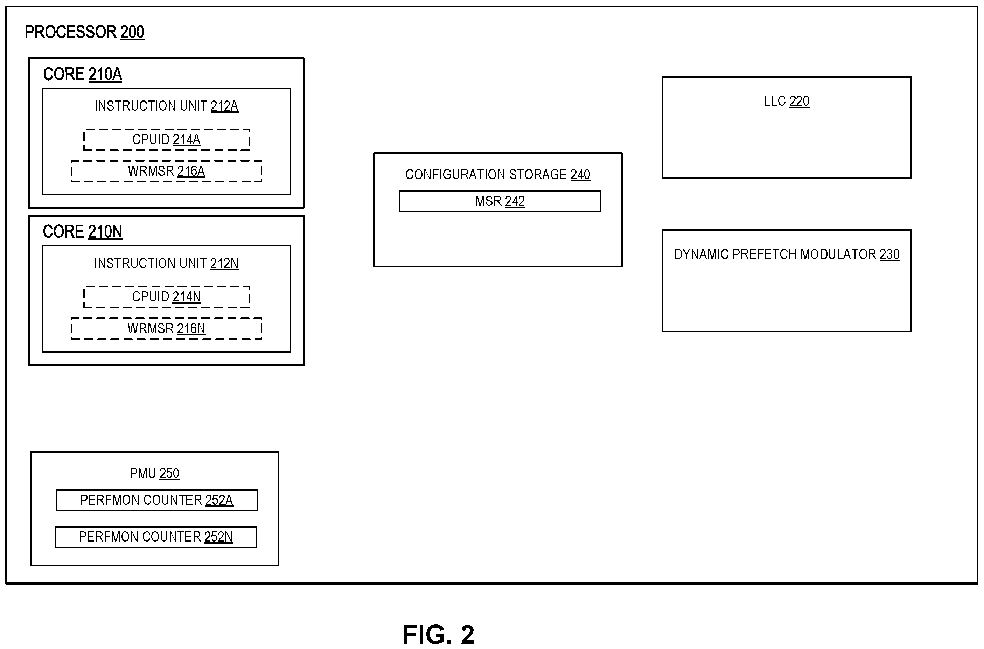

FIG. 2 illustrates a processor 200 for dynamic prefetch modulation according to an embodiment. Processor 200 may represent any one or more of processors 110A to 110N in FIG. 1 and/or any of processors 470, 480, or 415 in FIG. 4 and/or processor 500 in FIG. 5, each as described below. Although processor 200 may represent any processor, for convenience and/or examples, some features (e.g., instructions) may be referred to by a name associated with a specific processor architecture (e.g., Intel^{®} 64 and/or IA32), but embodiments are not limited to those features, names, architectures, etc.

Processor 200 may include any number of execution or processor cores, as represented by cores 210A to 210N, any of which may correspond to cores 502(A) to 502(N) in FIG. 5 or core 690 in FIG. 6B. Processor 200 may also include, outside a core (e.g., in a system agent or uncore), a shared, system, or last level cache represented by LLC 220 in FIG. 2 and which may correspond to any of LLC 112A to 112N and/or shared cache unit 506 in FIG. 5. In other embodiments, one or more caches on which dynamic prefetch modulation may be based may be within one or more cores.

Processor 200 also includes dynamic prefetch modulator 230, which may be implemented in circuitry, logic gates, structures, hardware, etc., all or parts of which may be included in or connected to a cache (e.g., LLC) and/or memory controller, such as integrated memory controllers (each, an IMC) 472 and 482 in FIG. 4, shared cache unit(s) 506 and/or IMC unit(s) 514 in FIG. 5, and/or memory unit 670 in FIG. 6B.

In embodiments and a further described below, one or more a dynamic prefetch modulators (e.g., 230) may control access to a main or system memory (e.g., DRAM) for prefetch requests based on whether the prefetch requests hit or miss a cache (e.g., 220) and the running memory stress level in the system. In various embodiments, the cache may be an LLC cache, a system cache, etc.

As shown, a core (e.g., 210A, 210N) includes an instruction unit (e.g., 212A, 212N), as well as any other elements (e.g., one or more execution units) not shown in FIG. 2. An instruction unit (e.g., 212A, 212N) may correspond to and/or be implemented/included in front-end unit 630 in Figure 6B, as described below, and/or may include any circuitry, logic gates, structures, and/or other hardware, such as an instruction decoder, to fetch, receive, decode, interpret, schedule, and/or handle instructions or programming mechanisms, such as a processor identification instruction (e.g., CPUID as described below) represented as blocks 214A and 214N and one or more write instructions (e.g., WRMSR as described below) represented as blocks 216A and 216N) to be executed and/or processed by processor cores 210A and 210N. In FIG. 2, instructions that may be decoded or otherwise handled by instruction units 212A and 212N are represented as blocks with broken line borders because these instructions are not themselves hardware, but rather that instruction units 212A and 212N may include hardware or logic capable of decoding or otherwise handling these instructions.

Any instruction format may be used in embodiments; for example, an instruction may include an opcode and one or more operands, where the opcode may be decoded into one or more micro-instructions or micro-operations for execution by an execution unit. Operands or other parameters may be associated with an instruction implicitly, directly, indirectly, or according to any other approach.

As shown in FIG. 2, processor 200 also includes configuration storage 240, which may include any one or more model or machine specific registers (each, an MSR, e.g., 242) or other registers or storage locations (for convenience, any such storage location or field or portion of such a storage location may be referred to as an MSR). Although configuration storage 240 is shown outside a core, one or more of the MSRs may be in one or more cores. MSRs may be used to control processor features, control and report on processor performance, handle system related functions, etc. In various embodiments, one or more of these registers or storage locations may or may not be accessible to application and/or user-level software, may be written to or programmed by software, a basic input/output system (BIOS), etc. In embodiments, the instruction set of processor 200 may include instructions to access (e.g., read and/or write) MSRs or other storage, such as an instruction to write to an MSR (WRMSR) and/or instructions to write to or program other registers or storage locations.

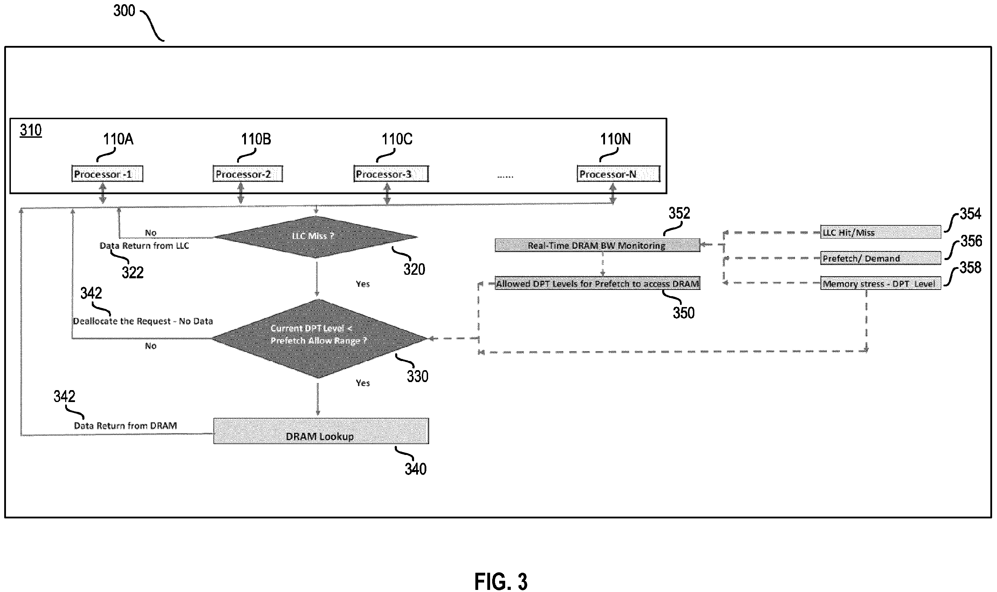

In embodiments, the configuration storage 240 includes an MSR 242 to store a prefetch allow range (PAR) as described below. This MSR may be referred to as a PAR register. For example, the prefetch allow range shown in FIG. 3 may represent one or more values programmed into MSR 242.

Processor 200 may also include a mechanism to indicate support for and enumeration of dynamic prefetch modulation capabilities according to embodiments. For example, in response to an instruction (e.g., in an Intel^{®} x86 processor, a CPUID instruction, one or more processor registers (e.g., EAX, EBX, ECX, EDX) may return information to indicate whether, to what extent, how, etc. dynamic prefetch modulation capabilities according to embodiments are supported (e.g., indication of supported PAR settings).

As shown in FIG. 2, processor 200 also includes performance monitoring unit (PMU) 250, which may include any circuitry, logic gates, structures, and/or other hardware to measure, monitor, and/or log performance information related to processor 200, software running on processor 200, and/or a system including processor 200. PMU 250 may include one or more performance monitoring (perfmon) counters 252A to 252N to count occurrences of clock cycles, events, events of a particular type, operations, occurrences, actions, conditions, processor parameters, or any other measure of or related to performance (any of which may be referred to for convenience as an event and/or counting an event). For example, a perfmon counter may increment or decrement for each occurrence of a selected event or increment or decrement for each clock cycle during a selected event. The events may include any of a variety of events related to execution of program code on processor 200, such as instructions retired, core clock cycles, reference clock cycles, cache references, cache misses, branch instructions retired, branch mispredictions retired, etc. Therefore, perfmon counters may be used in efforts to tune or profile program code to improve or optimize performance. Although PMU 250 is shown outside a core, one or more of the perfmon counters may be in one or more cores.

In embodiments, one or more of perfmon counters 252A to 252N may collect and report data to be used, as described below, for real-time DRAM bandwidth monitoring and/or dynamic prefetch modulation and tuning according to embodiments, such as, but not limited to, data related to LLC hit or miss rate, request type proportions (e.g., prefetch or demand), memory stress level (e.g., DPT level), etc.

In embodiments, dynamic prefetch modulation makes use of the different threshold levels of DRAM memory access stress levels, referred to as the Dynamic Prefetch Throttle (DPT) state. These stress levels may be categorized into multiple levels (e.g., 0, 1, 2, 3) in the increasing order of stress. The stress levels may be dynamically calculated based on the access rates to the DRAM in a multi core environment and may be used to control the generation rates of prefetches from the processors in the system (e.g., the higher the DPT level, the lower the prefetch generation rate).

In embodiments, a configurable prefetch allow range (PAR) or threshold (which for convenience may be referred to as a PAR) is used. The PAR may be configured (e.g., by a user or a software utility programming MSR 242) at run-time and/or may be based on the DRAM stress levels in the system. Use of the PAR may allow improved control (e.g., compared to a DPT technique alone) of prefetching by making decisions (e.g., with dynamic prefetch modulator 230) at the LLC (e.g., LLC 220) level based on more metrics. For example, a prefetch request that does not fall in the PAR and missed the LLC is dropped instead of dispatched. Therefore, prefetches that are not DRAM bound and just fetch data from the LLC still go through even at high DPT stress levels (e.g., at DPT stress levels at which DPT alone would stop or throttle prefetch requests), without leading to a bandwidth crunch. Computation of the stress levels and back pressure are dynamic, so DRAM bound prefetches are dropped only under a DRAM access stressed condition.

In embodiments, access to the DRAM (e.g., system memory 120) for prefetch requests is filtered (e.g., by dynamic prefetch modulators 114A to 114N), based on whether the prefetch requests hit or miss an LLC (e.g., LLC 112A to 112N), for a given running memory stress level in the system. The memory stress levels (e.g., DPT levels) may have a range from 0 to N, with 0 being the lowest and N being the highest stress level.

Embodiments establish (e.g., with dynamic prefetch modulators 114A to 114N) a control point at the LLC level, which may provide more precise and optimal controllability of prefetch throttling compared to existing techniques, based on the PAR. For example, programming a PAR of 2 indicates that prefetches are allowed for DPT levels less than or equal to 2. The decision making happens at two levels. The first level involves checking if the prefetch request hits or misses the LLC. If it misses the LLC, the running DPT level is compared with the configured PAR. If the running DPT level does not fall under the PAR value, then the prefetch request is dropped at the LLC level and not dispatched to the DRAM. Otherwise (the prefetch request hits LLC or the running DPT level falls under the PAR value), the prefetch request is dispatched to the system memory.

This selective prefetch dispatch algorithm may make use of existing information available in the PMONs, including the type of the request being issued towards the LLC (e.g., prefetch or demand), the LLC hit/miss information, and the running DPT Level in the system, and may provide improved utility of prefetches at all DPT stress levels by deploying a new dispatch control point to the DRAM at the LLC. Compared to existing techniques, the aggressiveness of prefetch stalling is relaxed for all the DPT levels using decision making at the LLC Level to selectively dispatch prefetch requests towards the DRAM at run time based on the allowed range and the running DPT stress level (instead of only the running DPT stress level).

In embodiments, the PAR value may be tuned and programmed based on the DPT levels (e.g., 0 to N), the proportion of request types (e.g., prefetch or demand), the LLC hit/miss rates, which may be monitored with PMONs to help obtain a picture of the DRAM access bandwidth in the system by prefetches. The programmed PAR may be used to decide, at the LLC level, whether to allow all, some, or no prefetches to access the DRAM. For example, the value programmed in PAR register is compared (e.g., by dynamic prefetch modulator 230) with the running DPT value in the system. If the prefetch request misses the LLC and the current running DPT level does not fall within the allowed prefetch range, then the request is deallocated from the requesting core, and no data is returned.

In embodiments, the decision making happens at the LLC level (e.g., by dynamic prefetch modulator 230) prior to dispatch to the DRAM. For example, with a value of 1 as the PAR while the running DPT level in the system is 2, prefetches would be stopped from accessing the DRAM. The feature may be disabled on the fly as well to ensure no such control is applied on the DRAM bound prefetches, strengthening the feature further in terms of robustness and survivability.

In embodiments, additional decision-making points based on metrics such historical prefetch usefulness and the prefetch lookahead distance may be deployed. In embodiments, machine learning algorithms may be used to dynamically train on the expected DRAM bandwidth in advance and select PAR values at finer granularity and/or more quickly.

FIG. 3 illustrates a method 300 for dynamic prefetch modulation according to an embodiment. Method 300 may be performed by and/or in connection with the operation of an apparatus such as system 100 as shown FIG. 1 and/or processor 200 as shown in FIG. 2; therefore, all or any portion of the preceding description may be applicable to method 300.

In 310, a processor (e.g., one of processors 110A, 110B, 110C, ... 110N) may make a request for data. In 320, it is determined (e.g., by dynamic prefetch modulator 230) whether the request hits or misses the processor's LLC (e.g., LLC 220). If a hit, then in 322, the data is returned to the processor from the LLC and the request is not dispatched to system memory (e.g., DRAM). If a miss, then method 300 continues to 330.

In 330, it is determined (e.g., by dynamic prefetch modulator 230) whether the current DPT level is less than the prefetch allow range. If no, then in 332, the request is deallocated (not dispatched to system memory) and no data is returned to the processor. If yes, then method 300 continues to 340.

In 340, the request is dispatched to system memory (e.g., DRAM) and a DRAM lookup for the data performed. In 342, the data is returned to the processor from the DRAM.

In embodiments, the information (e.g., the current DPT level and the PAR) for the decision in 330 may correspond to and/or be determined, programmed, tuned, optimized, etc. based on the allowed DPT levels for a prefetch to access DRAM 350, real-time DRAM bandwidth monitoring 352, LLC hit/miss rates 354, type of access (prefetch/demand) 356, and/or memory stress (DPT) level 358, any of which may be based on or provided by performance monitoring.

Operation based on any PAR or threshold described above may vary in different embodiments. For example, an action may be taken in response to a threshold being reached or met, in response to a threshold being crossed (in a positive direction (exceeded) or a negative direction), etc.

Example apparatuses, methods, etc.

According to some examples, an apparatus (e.g., a processing device or system) includes one or more processor cores, a cache, and a dynamic prefetch modulator to control access to a system memory for a prefetch request from one of the one or more processor cores based on whether the prefetch request misses the cache and on a system memory stress level.

Any such examples may include any or any combination of the following aspects. The cache is shared among the one or more processor cores. The dynamic prefetch modulator is to control access to the system memory further based on a comparison of the system memory stress level to a prefetch allow range value. The apparatus also includes a programmable storage location to store the prefetch allow range value. The dynamic prefetch modulator is to control access to the system memory at least by dispatching the prefetch request to the system memory only if the prefetch request misses the cache. The dynamic prefetch modulator is to control access to the system memory at least by returning data from the cache instead of dispatching the prefetch request to the system memory if the prefetch request hits the cache. The dynamic prefetch modulator is to control access to the system memory at least by dispatching the prefetch request to the system memory only if the prefetch request misses the cache and the system memory stress level is less than the prefetch allow range value. The dynamic prefetch modulator is to control access to the system memory at least by deallocating the prefetch request if the system memory stress level is greater than or equal to the prefetch allow range value.

According to some examples, a method includes determining whether a prefetch request from a processor core misses a cache; comparing a system memory stress level to a prefetch allow range value; and controlling access to a system memory for the prefetch request based on the determining whether the prefetch request from the processor core misses the cache and the comparing the system memory stress level to the prefetch allow range value.

Any such examples may include any or any combination of the following aspects. The cache is shared among the processor core and one or more other processor cores. The method also includes storing the prefetch allow range value in a programmable storage location. Controlling access to the system memory includes dispatching the prefetch request to the system memory only if the prefetch request misses the cache. Controlling access to the system memory includes returning data from the cache instead of dispatching the prefetch request to the system memory if the prefetch request hits the cache. Controlling access to the system memory includes dispatching the prefetch request to the system memory only if the prefetch request misses the cache and the system memory stress level is less than the prefetch allow range value. Controlling access to the system memory includes deallocating the prefetch request if the system memory stress level is greater than or equal to the prefetch allow range value.

According to some examples, a system includes a system memory and a dynamic prefetch modulator to control access to the system memory for a prefetch request from a processor based on whether the prefetch request misses a cache and on a system memory stress level.

Any such examples may include any or any combination of the following aspects. The dynamic prefetch modulator is to control access to the system memory further based on a comparison of the system memory stress level to a prefetch allow range value. The dynamic prefetch modulator is to control access to the system memory at least by dispatching the prefetch request to the system memory only if the prefetch request misses the cache and by returning data from the cache instead of dispatching the prefetch request to the system memory if the prefetch request hits the cache. The dynamic prefetch modulator is to control access to the system memory at least by dispatching the prefetch request to the system memory only if the prefetch request misses the cache and the system memory stress level is less than the prefetch allow range value. The dynamic prefetch modulator is to control access to the system memory at least by deallocating the prefetch request if the system memory stress level is greater than or equal to the prefetch allow range value.

According to some examples, an apparatus may include means for performing any function disclosed herein; an apparatus may include a data storage device that stores code that when executed by a hardware processor or controller causes the hardware processor or controller to perform any method or portion of a method disclosed herein; an apparatus, method, system etc. may be as described in the detailed description; a non-transitory machine-readable medium may store instructions that when executed by a machine causes the machine to perform any method or portion of a method disclosed herein. Embodiments may include any details, features, etc. or combinations of details, features, etc. described in this specification.

Example 1. An apparatus comprising:
one or more processor cores;
a cache; and
a dynamic prefetch modulator to control access to a system memory for a prefetch request from one of the one or more processor cores based on whether the prefetch request misses the cache and on a system memory stress level.

Example 2. The apparatus of example 1, wherein the cache is shared among the one or more processor cores.

Example 3. The apparatus of example 1, wherein the dynamic prefetch modulator is to control access to the system memory further based on a comparison of the system memory stress level to a prefetch allow range value.

Example 4. The apparatus of example 3, further comprising a programmable storage location to store the prefetch allow range value.

Example 5. The apparatus of example 1, wherein the dynamic prefetch modulator is to control access to the system memory at least by dispatching the prefetch request to the system memory only if the prefetch request misses the cache.

Example 6. The apparatus of example 1, wherein the dynamic prefetch modulator is to control access to the system memory at least by returning data from the cache instead of dispatching the prefetch request to the system memory if the prefetch request hits the cache.

Example 7. The apparatus of example 3, wherein the dynamic prefetch modulator is to control access to the system memory at least by dispatching the prefetch request to the system memory only if the prefetch request misses the cache and the system memory stress level is less than the prefetch allow range value.

Example 8. The apparatus of example 3, wherein the dynamic prefetch modulator is to control access to the system memory at least by deallocating the prefetch request if the system memory stress level is greater than or equal to the prefetch allow range value.

Example 9. A method comprising:
determining whether a prefetch request from a processor core misses a cache;
comparing a system memory stress level to a prefetch allow range value; and
controlling access to a system memory for the prefetch request based on the determining whether the prefetch request from the processor core misses the cache and the comparing the system memory stress level to the prefetch allow range value.

Example 10. The method of example 9, wherein the cache is shared among the processor core and one or more other processor cores.

Example 11. The method of example 9, further comprising storing the prefetch allow range value in a programmable storage location.

Example 12. The method of example 9, wherein controlling access to the system memory includes dispatching the prefetch request to the system memory only if the prefetch request misses the cache.

Example 13. The method of example 9, wherein controlling access to the system memory includes returning data from the cache instead of dispatching the prefetch request to the system memory if the prefetch request hits the cache.

Example 14. The method of example 9, wherein controlling access to the system memory includes dispatching the prefetch request to the system memory only if the prefetch request misses the cache and the system memory stress level is less than the prefetch allow range value.

Example 15. The method of example 9, wherein controlling access to the system memory includes deallocating the prefetch request if the system memory stress level is greater than or equal to the prefetch allow range value.

Example 16. A system comprising:
a system memory; and
a dynamic prefetch modulator to control access to the system memory for a prefetch request from a processor based on whether the prefetch request misses a cache and on a system memory stress level.

Example 17. The system of example 16, wherein the dynamic prefetch modulator is to control access to the system memory further based on a comparison of the system memory stress level to a prefetch allow range value.

Example 18. The system of example 16, wherein the dynamic prefetch modulator is to control access to the system memory at least by dispatching the prefetch request to the system memory only if the prefetch request misses the cache and by returning data from the cache instead of dispatching the prefetch request to the system memory if the prefetch request hits the cache.

Example 19. The system of example 17, wherein the dynamic prefetch modulator is to control access to the system memory at least by dispatching the prefetch request to the system memory only if the prefetch request misses the cache and the system memory stress level is less than the prefetch allow range value.

Example 20. The system of example 17, wherein the dynamic prefetch modulator is to control access to the system memory at least by deallocating the prefetch request if the system memory stress level is greater than or equal to the prefetch allow range value.

### Example Computer Architectures

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

FIG. 4 illustrates an example computing system. Multiprocessor system 400 is an interfaced system and includes a plurality of processors or cores including a first processor 470 and a second processor 480 coupled via an interface 450 such as a point-to-point (P-P) interconnect, a fabric, and/or bus. In some examples, the first processor 470 and the second processor 480 are homogeneous. In some examples, the first processor 470 and the second processor 480 are heterogenous. Though the example system 400 is shown to have two processors, the system may have three or more processors, or may be a single processor system. In some examples, the computing system is a system on a chip (SoC).

Processors 470 and 480 are shown including integrated memory controller (IMC) circuitry 472 and 482, respectively. Processor 470 also includes interface circuits 476 and 478; similarly, second processor 480 includes interface circuits 486 and 488. Processors 470, 480 may exchange information via the interface 450 using interface circuits 478, 488. IMCs 472 and 482 couple the processors 470, 480 to respective memories, namely a memory 432 and a memory 434, which may be portions of main memory locally attached to the respective processors.

Processors 470, 480 may each exchange information with a network interface (NW I/F) 490 via individual interfaces 452, 454 using interface circuits 476, 494, 486, 498. The network interface 490 (e.g., one or more of an interconnect, bus, and/or fabric, and in some examples is a chipset) may optionally exchange information with a coprocessor 438 via an interface circuit 492. In some examples, the coprocessor 438 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 470, 480 or outside of both processors, yet connected with the processors via an interface such as P-P interconnect, such that either or both processors' local cache information may be stored in the shared cache if a processor is placed into a low power mode.

Network interface 490 may be coupled to a first interface 416 via interface circuit 496. In some examples, first interface 416 may be an interface such as a Peripheral Component Interconnect (PCI) interconnect, a PCI Express interconnect or another I/O interconnect. In some examples, first interface 416 is coupled to a power control unit (PCU) 417, which may include circuitry, software, and/or firmware to perform power management operations with regard to the processors 470, 480 and/or co-processor 438. PCU 417 provides control information to a voltage regulator (not shown) to cause the voltage regulator to generate the appropriate regulated voltage. PCU 417 also provides control information to control the operating voltage generated. In various examples, PCU 417 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 417 is illustrated as being present as logic separate from the processor 470 and/or processor 480. In other cases, PCU 417 may execute on a given one or more of cores (not shown) of processor 470 or 480. In some cases, PCU 417 may be implemented as a microcontroller (dedicated or general-purpose) or other control logic configured to execute its own dedicated power management code, sometimes referred to as P-code. In yet other examples, power management operations to be performed by PCU 417 may be implemented externally to a processor, such as by way of a separate power management integrated circuit (PMIC) or another component external to the processor. In yet other examples, power management operations to be performed by PCU 417 may be implemented within BIOS or other system software.

Various I/O devices 414 may be coupled to first interface 416, along with a bus bridge 418 which couples first interface 416 to a second interface 420. In some examples, one or more additional processor(s) 415, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 416. In some examples, second interface 420 may be a low pin count (LPC) interface. Various devices may be coupled to second interface 420 including, for example, a keyboard and/or mouse 422, communication devices 427 and storage circuitry 428. Storage circuitry 428 may be one or more non-transitory machine-readable storage media as described below, such as a disk drive or other mass storage device which may include instructions/code and data 430. Further, an audio I/O 424 may be coupled to second interface 420. Note that other architectures than the point-to-point architecture described above are possible. For example, instead of the point-to-point architecture, a system such as multiprocessor system 400 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

FIG. 5 illustrates a block diagram of an example processor and/or SoC 500 that may have one or more cores and an integrated memory controller. The solid lined boxes illustrate a processor 500 with a single core 502(A), system agent unit circuitry 510, and a set of one or more interface controller unit(s) circuitry 516, while the optional addition of the dashed lined boxes illustrates an alternative processor 500 with multiple cores 502(A)-(N), a set of one or more integrated memory controller unit(s) circuitry 514 in the system agent unit circuitry 510, and special purpose logic 508, as well as a set of one or more interface controller units circuitry 516. Note that the processor 500 may be one of the processors 470 or 480, or co-processor 438 or 415 of FIG. 4.

Thus, different implementations of the processor 500 may include: 1) a CPU with the special purpose logic 508 being integrated graphics and/or scientific (throughput) logic (which may include one or more cores, not shown), and the cores 502(A)-(N) being one or more general purpose cores (e.g., general purpose in-order cores, general purpose out-of-order cores, or a combination of the two); 2) a coprocessor with the cores 502(A)-(N) being a large number of special purpose cores intended primarily for graphics and/or scientific (throughput); and 3) a coprocessor with the cores 502(A)-(N) being a large number of general purpose in-order cores. Thus, the processor 500 may be a general-purpose processor, coprocessor, or special-purpose processor, such as, for example, a network or communication processor, compression engine, graphics processor, GPGPU (general purpose graphics processing unit), a high throughput many integrated cores (MIC) coprocessor (including 30 or more cores), embedded processor, or the like. The processor may be implemented on one or more chips. The processor 500 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 504(A)-(N) within the cores 502(A)-(N), a set of one or more shared cache unit(s) circuitry 506, and external memory (not shown) coupled to the set of integrated memory controller unit(s) circuitry 514. The set of one or more shared cache unit(s) circuitry 506 may include one or more mid-level caches, such as level 2 (L2), level 3 (L3), level 4 (L4), or other levels of cache, such as a last level cache (LLC), and/or combinations thereof. While in some examples interface network circuitry 512 (e.g., a ring interconnect) interfaces the special purpose logic 508 (e.g., integrated graphics logic), the set of shared cache unit(s) circuitry 506, and the system agent unit circuitry 510, alternative examples use any number of well-known techniques for interfacing such units. In some examples, coherency is maintained between one or more of the shared cache unit(s) circuitry 506 and cores 502(A)-(N). In some examples, interface controller unit circuitry 516 couples the cores 502 to one or more other devices 518 such as one or more I/O devices, storage, one or more communication devices (e.g., wireless networking, wired networking, etc.), etc.

In some examples, one or more of the cores 502(A)-(N) are capable of multi-threading. The system agent unit circuitry 510 includes those components coordinating and operating cores 502(A)-(N). The system agent unit circuitry 510 may include, for example, power control unit (PCU) circuitry and/or display unit circuitry (not shown). The PCU may be or may include logic and components needed for regulating the power state of the cores 502(A)-(N) and/or the special purpose logic 508 (e.g., integrated graphics logic). The display unit circuitry is for driving one or more externally connected displays.

The cores 502(A)-(N) may be homogenous in terms of instruction set architecture (ISA). Alternatively, the cores 502(A)-(N) may be heterogeneous in terms of ISA; that is, a subset of the cores 502(A)-(N) may be capable of executing an ISA, while other cores may be capable of executing only a subset of that ISA or another ISA.

### Example Core Architectures - In-order and out-of-order core block diagram.

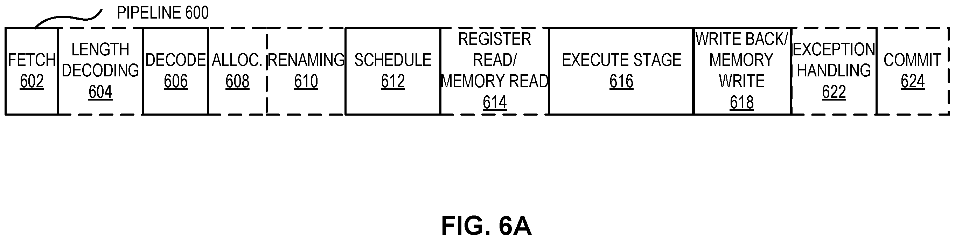

FIG. 6A is a block diagram illustrating both an example in-order pipeline and an example register renaming, out-of-order issue/execution pipeline according to examples. FIG. 6B is a block diagram illustrating both an example in-order architecture core and an example register renaming, out-of-order issue/execution architecture core to be included in a processor according to examples. The solid lined boxes in FIGS. 6A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 6A, a processor pipeline 600 includes a fetch stage 602, an optional length decoding stage 604, a decode stage 606, an optional allocation (Alloc) stage 608, an optional renaming stage 610, a schedule (also known as a dispatch or issue) stage 612, an optional register read/memory read stage 614, an execute stage 616, a write back/memory write stage 618, an optional exception handling stage 622, and an optional commit stage 624. One or more operations can be performed in each of these processor pipeline stages. For example, during the fetch stage 602, one or more instructions are fetched from instruction memory, and during the decode stage 606, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 606 and the register read/memory read stage 614 may be combined into one pipeline stage. In one example, during the execute stage 616, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 6B may implement the pipeline 600 as follows: 1) the instruction fetch circuitry 638 performs the fetch and length decoding stages 602 and 604; 2) the decode circuitry 640 performs the decode stage 606; 3) the rename/allocator unit circuitry 652 performs the allocation stage 608 and renaming stage 610; 4) the scheduler(s) circuitry 656 performs the schedule stage 612; 5) the physical register file(s) circuitry 658 and the memory unit circuitry 670 perform the register read/memory read stage 614; the execution cluster(s) 660 perform the execute stage 616; 6) the memory unit circuitry 670 and the physical register file(s) circuitry 658 perform the write back/memory write stage 618; 7) various circuitry may be involved in the exception handling stage 622; and 8) the retirement unit circuitry 654 and the physical register file(s) circuitry 658 perform the commit stage 624.

FIG. 6B shows a processor core 690 including front-end unit circuitry 630 coupled to execution engine unit circuitry 650, and both are coupled to memory unit circuitry 670. The core 690 may be a reduced instruction set architecture computing (RISC) core, a complex instruction set architecture computing (CISC) core, a very long instruction word (VLIW) core, or a hybrid or alternative core type. As yet another option, the core 690 may be a special-purpose core, such as, for example, a network or communication core, compression engine, coprocessor core, general purpose computing graphics processing unit (GPGPU) core, graphics core, or the like.

The front-end unit circuitry 630 may include branch prediction circuitry 632 coupled to instruction cache circuitry 634, which is coupled to an instruction translation lookaside buffer (TLB) 636, which is coupled to instruction fetch circuitry 638, which is coupled to decode circuitry 640. In one example, the instruction cache circuitry 634 is included in the memory unit circuitry 670 rather than the front-end circuitry 630. The decode circuitry 640 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 640 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 640 may be implemented using various different mechanisms. Examples of suitable mechanisms include, but are not limited to, look-up tables, hardware implementations, programmable logic arrays (PLAs), microcode read only memories (ROMs), etc. In one example, the core 690 includes a microcode ROM (not shown) or other medium that stores microcode for certain macroinstructions (e.g., in decode circuitry 640 or otherwise within the front-end circuitry 630). In one example, the decode circuitry 640 includes a micro-operation (micro-op) or operation cache (not shown) to hold/cache decoded operations, micro-tags, or micro-operations generated during the decode or other stages of the processor pipeline 600. The decode circuitry 640 may be coupled to rename/allocator unit circuitry 652 in the execution engine circuitry 650.

The execution engine circuitry 650 includes the rename/allocator unit circuitry 652 coupled to retirement unit circuitry 654 and a set of one or more scheduler(s) circuitry 656. The scheduler(s) circuitry 656 represents any number of different schedulers, including reservations stations, central instruction window, etc. In some examples, the scheduler(s) circuitry 656 can include arithmetic logic unit (ALU) scheduler/scheduling circuitry, ALU queues, address generation unit (AGU) scheduler/scheduling circuitry, AGU queues, etc. The scheduler(s) circuitry 656 is coupled to the physical register file(s) circuitry 658. Each of the physical register file(s) circuitry 658 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 658 includes vector registers unit circuitry, writemask registers unit circuitry, and scalar register unit circuitry. These register units may provide architectural vector registers, vector mask registers, general-purpose registers, etc. The physical register file(s) circuitry 658 is coupled to the retirement unit circuitry 654 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 654 and the physical register file(s) circuitry 658 are coupled to the execution cluster(s) 660. The execution cluster(s) 660 includes a set of one or more execution unit(s) circuitry 662 and a set of one or more memory access circuitry 664. The execution unit(s) circuitry 662 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 656, physical register file(s) circuitry 658, and execution cluster(s) 660 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 664). It should also be understood that where separate pipelines are used, one or more of these pipelines may be out-of-order issue/execution and the rest in-order.

In some examples, the execution engine unit circuitry 650 may perform load store unit (LSU) address/data pipelining to an Advanced Microcontroller Bus (AMB) interface (not shown), and address phase and writeback, data phase load, store, and branches.

The set of memory access circuitry 664 is coupled to the memory unit circuitry 670, which includes data TLB circuitry 672 coupled to data cache circuitry 674 coupled to level 2 (L2) cache circuitry 676. In one example, the memory access circuitry 664 may include load unit circuitry, store address unit circuitry, and store data unit circuitry, each of which is coupled to the data TLB circuitry 672 in the memory unit circuitry 670. The instruction cache circuitry 634 is further coupled to the level 2 (L2) cache circuitry 676 in the memory unit circuitry 670. In one example, the instruction cache 634 and the data cache 674 are combined into a single instruction and data cache (not shown) in L2 cache circuitry 676, level 3 (L3) cache circuitry (not shown), and/or main memory. The L2 cache circuitry 676 is coupled to one or more other levels of cache and eventually to a main memory.

The core 690 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 690 includes logic to support a packed data instruction set architecture extension (e.g., AVX1, AVX2), thereby allowing the operations used by many multimedia applications to be performed using packed data.

### Example Execution Unit(s) Circuitry.

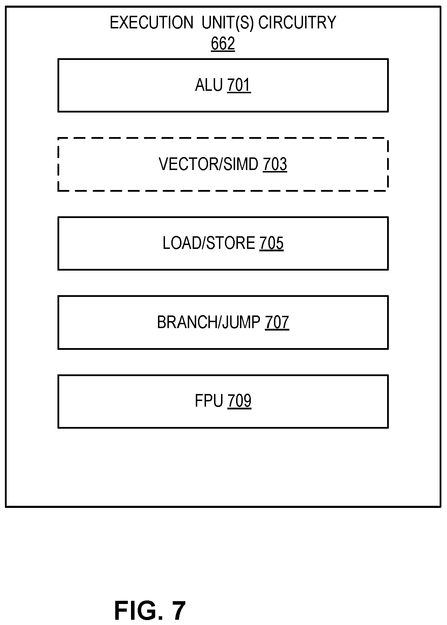

FIG. 7 illustrates examples of execution unit(s) circuitry, such as execution unit(s) circuitry 662 of FIG. 6B. As illustrated, execution unit(s) circuity 662 may include one or more ALU circuits 701, optional vector/single instruction multiple data (SIMD) circuits 703, load/store circuits 705, branch/jump circuits 707, and/or Floating-point unit (FPU) circuits 709. ALU circuits 701 perform integer arithmetic and/or Boolean operations. Vector/SIMD circuits 703 perform vector/SIMD operations on packed data (such as SIMD/vector registers). Load/store circuits 705 execute load and store instructions to load data from memory into registers or store from registers to memory. Load/store circuits 705 may also generate addresses. Branch/jump circuits 707 cause a branch or jump to a memory address depending on the instruction. FPU circuits 709 perform floating-point arithmetic. The width of the execution unit(s) circuitry 662 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

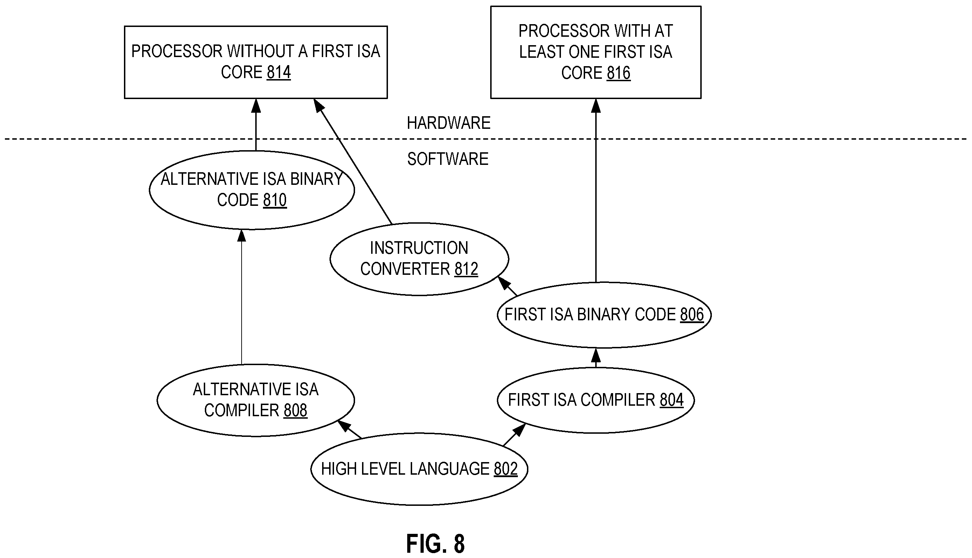

FIG. 8 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 8 shows a program in a high-level language 802 may be compiled using a first ISA compiler 804 to generate first ISA binary code 806 that may be natively executed by a processor with at least one first ISA core 816. The processor with at least one first ISA core 816 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 804 represents a compiler that is operable to generate first ISA binary code 806 (e.g., object code) that can, with or without additional linkage processing, be executed on the processor with at least one first ISA core 816. Similarly, FIG. 8 shows the program in the high-level language 802 may be compiled using an alternative ISA compiler 808 to generate alternative ISA binary code 810 that may be natively executed by a processor without a first ISA core 814. The instruction converter 812 is used to convert the first ISA binary code 806 into code that may be natively executed by the processor without a first ISA core 814. This converted code is not necessarily to be the same as the alternative ISA binary code 810; however, the converted code will accomplish the general operation and be made up of instructions from the alternative ISA. Thus, the instruction converter 812 represents software, firmware, hardware, or a combination thereof that, through emulation, simulation, or any other process, allows a processor or other electronic device that does not have a first ISA processor or core to execute the first ISA binary code 806.

References to "one example," "an example," "one embodiment," "an embodiment," etc., indicate that the example or embodiment described may include a particular feature, structure, or characteristic, but every example or embodiment may not necessarily include the particular feature, structure, or characteristic. Moreover, such phrases do not necessarily refer to the same example or embodiment. Further, when a particular feature, structure, or characteristic is described in connection with an example or embodiment, it is submitted that it is within the knowledge of one skilled in the art to affect such feature, structure, or characteristic in connection with other examples or embodiments whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e., A and B, A and C, B and C, and A, B and C). As used in this specification and the claims and unless otherwise specified, the use of the ordinal adjectives "first," "second," "third," etc. to describe an element merely indicates that a particular instance of an element or different instances of like elements are being referred to and is not intended to imply that the elements so described must be in a particular sequence, either temporally, spatially, in ranking, or in any other manner. Also, as used in descriptions of embodiments, a "/" character between terms may mean that what is described may include or be implemented using, with, and/or according to the first term and/or the second term (and/or any other additional terms).

Also, the terms "bit," "flag," "field," "entry," "indicator," etc., may be used to describe any type or content of a storage location in a register, table, database, or other data structure, whether implemented in hardware or software, but are not meant to limit embodiments to any particular type of storage location or number of bits or other elements within any particular storage location. For example, the term "bit" may be used to refer to a bit position within a register and/or data stored or to be stored in that bit position. The term "clear" may be used to indicate storing or otherwise causing the logical value of zero to be stored in a storage location, and the term "set" may be used to indicate storing or otherwise causing the logical value of one, all ones, or some other specified value to be stored in a storage location; however, these terms are not meant to limit embodiments to any particular logical convention, as any logical convention may be used within embodiments.

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. An apparatus comprising:
one or more processor cores;
a cache; and
a dynamic prefetch modulator to control access to a system memory for a prefetch request from one of the one or more processor cores based on whether the prefetch request misses the cache and on a system memory stress level.

2. The apparatus of claim 1, wherein the cache is shared among the one or more processor cores.

3. The apparatus of claim 1 or 2, wherein the dynamic prefetch modulator is to control access to the system memory further based on a comparison of the system memory stress level to a prefetch allow range value.

4. The apparatus of any of claims 1-3, further comprising a programmable storage location to store the prefetch allow range value.

5. The apparatus of any of claims 1-4, wherein the dynamic prefetch modulator is to control access to the system memory at least by dispatching the prefetch request to the system memory only if the prefetch request misses the cache.

6. The apparatus of any of claims 1-5, wherein the dynamic prefetch modulator is to control access to the system memory at least by returning data from the cache instead of dispatching the prefetch request to the system memory if the prefetch request hits the cache.

7. The apparatus of claim 3, wherein the dynamic prefetch modulator is to control access to the system memory at least by:
dispatching the prefetch request to the system memory only if the prefetch request misses the cache and the system memory stress level is less than the prefetch allow range value; or
deallocating the prefetch request if the system memory stress level is greater than or equal to the prefetch allow range value.

8. A method comprising:
determining whether a prefetch request from a processor core misses a cache;
comparing a system memory stress level to a prefetch allow range value; and
controlling access to a system memory for the prefetch request based on the determining whether the prefetch request from the processor core misses the cache and the comparing the system memory stress level to the prefetch allow range value.

9. The method of claim 8, wherein controlling access to the system memory includes dispatching the prefetch request to the system memory only if the prefetch request misses the cache.

10. The method of claim 8, wherein controlling access to the system memory includes returning data from the cache instead of dispatching the prefetch request to the system memory if the prefetch request hits the cache.

11. The method of claim 8, wherein controlling access to the system memory includes deallocating the prefetch request if the system memory stress level is greater than or equal to the prefetch allow range value.

12. A system comprising:
a system memory; and
a dynamic prefetch modulator to control access to the system memory for a prefetch request from a processor based on whether the prefetch request misses a cache and on a system memory stress level.

13. The system of claim 12, wherein the dynamic prefetch modulator is to control access to the system memory further based on a comparison of the system memory stress level to a prefetch allow range value.

14. The system of claim 12 or 13, wherein the dynamic prefetch modulator is to control access to the system memory at least by dispatching the prefetch request to the system memory only if the prefetch request misses the cache and by returning data from the cache instead of dispatching the prefetch request to the system memory if the prefetch request hits the cache.
